Europäisches Patentamt

European Patent Office

Office européen des brevets

(11) Publication number: **0 026 243**

**A1**

(12) # EUROPEAN PATENT APPLICATION

(21) Application number: **79104846.5**

(22) Date of filing: **03.12.79**

(51) Int. Cl.³: **F 02 M 31/18**

(30) Priority: **07.09.79 PH 23009**
**18.10.79 PH 23189**

(43) Date of publication of application:
**08.04.81 Bulletin 81/14**

(84) Designated Contracting States:
**AT BE CH DE FR GB IT LU NL SE**

(71) Applicant: **Alegre, Adolfo P.**
**No. 119 Bignay Street Project II**
**Quezon City; Antipolo Rizal(PH)**

(71) Applicant: **Guidote, Armando E.**
**No. 7 Caimito Street**
**Forbes Park Makati, Metro Manila(PH)**

(71) Applicant: **Puyat, Alfonso G.**
**No. 7 Caimito Street**
**Forbes Park Makati, Metro Manila(PH)**

(72) Inventor: **Alegre, Adolfo P.**
**No. 119 Bignay Street Project II**
**Quezon City; Antipolo Rizal(PH)**

(72) Inventor: **Guidote, Armando E.**
**No. 7 Caimito Street**
**Forbes Park Makati, Metro Manila(PH)**

(72) Inventor: **Puyat, Alfonso G.**
**No. 7 Caimito Street**
**Forbes Park Makati, Metro Manila(PH)**

(74) Representative: **Beetz, sen., Richard, Dipl.-Ing.**
**Patentanwälte Dipl.-Ing. R. Beetz sen. Dipl.-Ing. K.**
**Lamprecht, Dr. Ing. R. Beetz jr. et al,**
**Rechtsanwalt Dipl.-Phys. Dr. jur. U. Heidrich Dr.-Ing. W.**
**Timpe, Dipl.-Ing. J. Siegfried Priv.-Doz. Dipl.-Chem.**
**Dr.rer.nat. W. Schmitt-Fumian**
**Steinsdorfstrasse 10 D-8000 München 22(DE)**

(54) **Fuel vapor charge producing device.**

(57) A fuel vapor charge producing device having a liquid fuel or mixture container (11) and a float (13) secured inside said device to control the flow of liquid fuel or mixture into the container (11) comprises means for agitating said fuel or said mixture to provide the proper or ideal air/fuel or mixture ratio. Said agitating means are an air inlet above the liquid or mixture level and another air inlet below the liquid or mixture level or an air agitator duct (17') integrated in said device extending from an air filter housing (22') to the bottom of the device and another air duct (26') extending to the inside of said container (11) and having an outwardly bent portion (26a).

Fig. 5

0026243

## Fuel Vapor Charge Producing Device

This invention relates in general to internal combustion engine, and more particularly to a new method of fuel carburetion to form a vapor charge for combustion in conventional internal combustion engine and the devices therefor.

One of the most common carburetion device used today is the automobile carburetor adapted to vaporize the liquid fuel and mix it to the proper amount of atmospheric air for combustion in the combustion chamber of the engine. The finer the fuel mist formed, the better combustion of the vaporized liquid fuel will take place, thus utilizing to the maximum the heat energy of the fuel to give and produce a clean exhaust gas and a potential increase in power.

However, since the carburetor is a mechanical device, it has to be adjusted now and then, to tune and set regularly to the right setting to obtain a good or ideal air-fuel mixture.

It is also an accepted fact, that fuel in vapor form is more combustible than fuel in liquid state, such that complete combustion of the vapor fuel is more attainable than fuel in liquid form. The more complete the combustion the fuel is subjected to, the greater the heat utilization of the fuel is attained.

0154-30.418EP KoMs

It is from this fact that this invention was conceived of and developed.

Applicant's discovered that the supply and control of air to agitate the fuel or mixture in the device to attain a proper amount of vapor charge sufficient to supply any engine piston displacement seems insufficient. In large capacity engines, more vapor charge from the device is required and as such, a variable control means should be provided to properly adjust the amount of air to agitate the fuel or mixture and to control the air-fuel mixture ratio. A further drawback is in the lack of providing a continuous supply of fresh fuel in the device.

It has also been observed that fuel movement or splashing is created inside the device in passing over rough roads, bumps or sudden stops and sharp turns, resulting in the disruption of the air fuel mixture.

It is therefore a principal object of this invention to provide a new method of carburetion, of producing a vapor charge adapted for combustion in a combustion chamber of an internal combustion engine and the device thereof.

It is also an object of this invention to provide a vapor charge carburetion method and device which is easily adapted on existing internal combustion engines without need of modifying the existing one.

Another object of this invention is to provide a new system of carburetion and device which is simple in construction yet efficient.

A further object of this invention is to provide a new carburetion system and device which will give the engine a clean exhaust gas.

A further object of this invention is to provide a new method and device of fuel carburetion for internal combustion engine which could be constructed and manufactured with simple devices and equipment.

Another object of this invention is to provide a new system of fuel carburetion and device which can use different kinds of liquid fuel or mixture.

It is another principal object of the present invention to provide an improved vapor charge producing device wherein a multi-air jet selector disc is incorporated whereby the air/fuel mixture ratio for any engine piston displacement could be attained.

A further object of this invention is to provide a vapor carburetion device wherein a fuel return line having a fuel return valve is incorporated to insure continuous supply of fresh fuel.

It is also the object of this invention to provide buffles inside the device to minimize the fuel splashing.

Another object of the invention is to provide a vapor carburetion device, the construction of which is simplified by integrating the air filter unit and the air ducts to the body to make the device more compact, and by simplifying the fuel or mixture bubbler to make it more effective and easily replaceable.

These objects and other advantages of this invention will come to light and the invention will be fully and completely understood by reading the detailed description in the specification when taken in conjunction with the accompanying drawings, wherein:

Figure 1  is a vertical cross-sectional view of a first embodiment of the new carburetion device;

Figure 2  is a schematic diagram of the method of fuel carburetion and device as connected to the existing internal combusion engine;

Figure 3  is a perspective view of a second embodiment of the new vapor carburetion device in accordance with the present invention and showing its connection to an internal combustion engine;

Figure 4  is an exploded perspective view of the carburetion device in Fig. 3;

Figure 5  is a cross-sectional view taken along line 3-3 of Fig. 3;

Figure 6  is a cross-sectional view taken along line 4-4 of Fig. 3;

Figure 7  is a cross-sectional view of the device in Fig. 3;

Figure 8  is a cross-sectional view taken along line 6-6 of Fig. 6, and

Figure 9  is a schematic diagram of the system of fuel carburetion and device therefor as connected to an internal combustion engine.

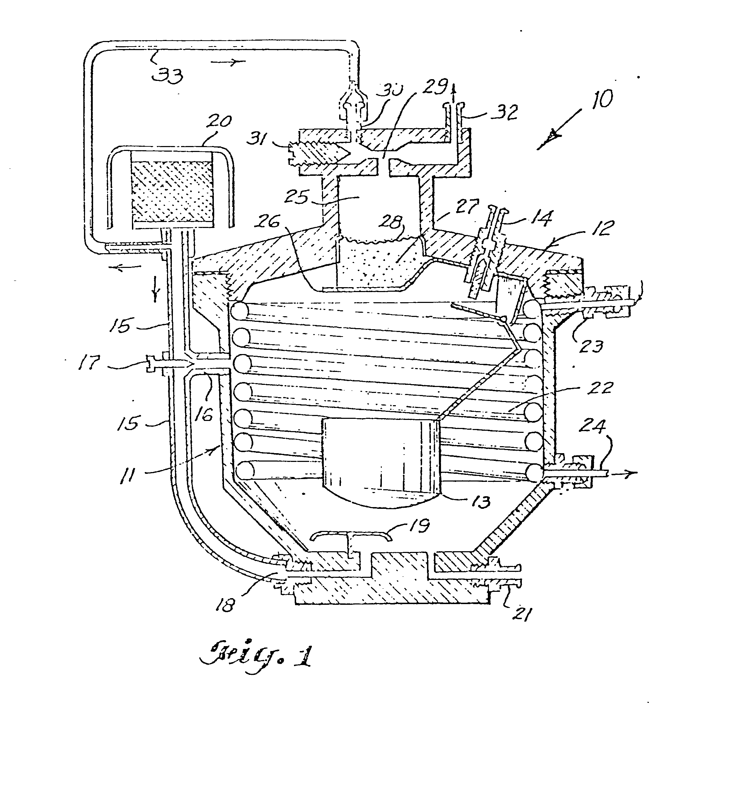

Referring now to the drawings, there is shown in Figure 1, the vapor charge producing device generally designated as 10. Device 10 is a bowl-shaped container 11 provided with a screwable cover 12. The container can, of course, vary in shape. The device is provided with a float 13 to control the fuel or mixture level inside the bowl by way of the fuel or mixture inlet-valve 14 made on the cover 12.

The bowl 11 is provided with an air pipe 15 having an air inlet 16 on its side and provided with a control valve 17 to control fuel or mixture agitation and together with valve 31 to control the air/fuel or mixture ratio and to regulate the flow. Also there is an air inlet 18 made at the bottom which is provided with an air cap 19 such that the entering air is properly distributed around the bottom and be in contact with the liquid fuel or mixture as it rises up to form the vapor charge. The pipe 15 is provided with air filter 20 and the bowl's bottom is further provided with a liquid or mixture inlet-drain 21.

Also placed inside the container 11 is a heating coil 22 with an inlet 23 and an outlet 24 for the entry of a heating medium such as the hot cooling water from the engine's radiator or the lubricating oil (not shown).

On cover 12 is formed the main vapor outlet 25 and is provided with a splash guard 26 and a foam filter 27 with a screen 28 which can be removed or replaced by similar materials such that only dry vapor charge is discharged from the bowl. The outlet has a venturi tube 29 with an inlet opening 30 provided with a control valve 31 and a final vapor discharge opening 32. An air pipe 33 is connected to the inlet opening 30 and tapped from pipe 15 just after the filter 20 or directly from the top portion of filter 20. With this connection, greater vapor flow is induced at the venturi 29.

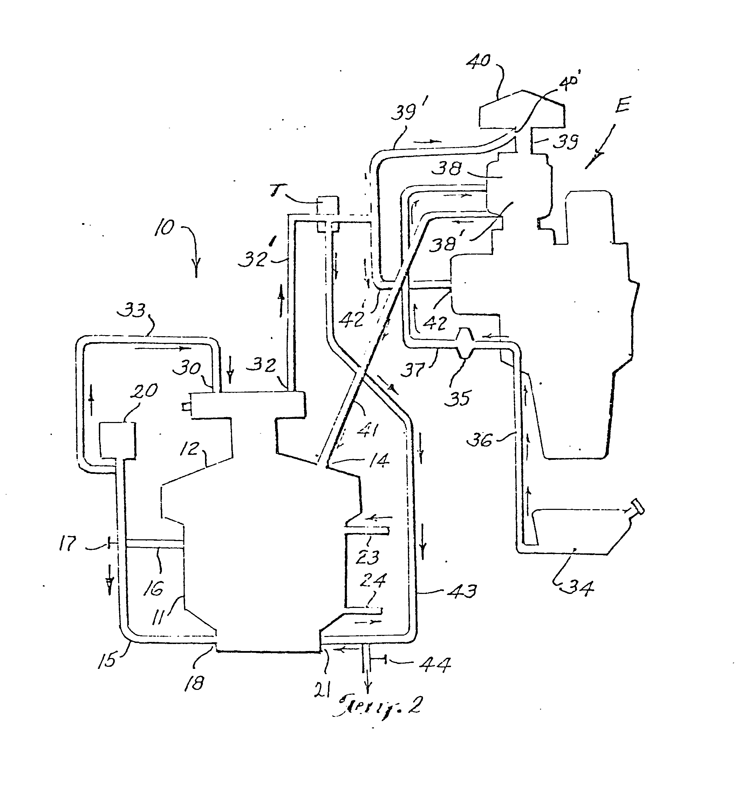

Figure 2 shows the schematic connection of the system,
which shows the vapor charge producing device 10
connected to a conventional internal combustion engine E.

Engine E is provided with a fuel tank 34 connected to a
fuel pump 35 by pipe 36 and by pipe 37 which is connected
to the carburetor 38. The carburetor 38 has an air inlet
39 connected to an air filter 40 which is a conventional
set-up in an internal combustion engine.

Device 10 receives its fuel or mixture from the fuel pipe
41 connected to the carburetor bowl drain 38 or to the
fuel line between the fuel pump and the carburetor.
Vapor from the device 10 is discharge through opening 32
by pipe 32' passing through liquid trap T and is connected to the engine's intake manifold 42 by pipe 42' and to
the air inlet 40' of the engine just after the air filter
40 by pipe 39' which pipe can be optionally removed. The
liquid collected in trap T is sent back to device 10 by
return pipe 43 which is also provided with a drain valve
44. When it is desired to drain the device 10, drain
valve 44 may then be opened.

When the engine E is started, the fuel pump 35 starts to
supply gasoline to the vapor charge producing device 10
coming from the carburetor's bowl drain 38' or anywhere
between the fuel pump and the carburetor through fuel
pipe 41 until the desired level as controlled by the
float 13 to close the fuel inlet-valve 14. Then adjust
the air-fuel mixture screw of the engine's carburetor to
almost close (about 1/4 to 1/2 turn open) depending on
the smoothest idling engine running and required idling
RPM.

As the engine E runs on idling, vacuum is created in the intake manifold 42, thus also creating a vacuum in the device 10 through pipes 42' and 32' (note: - there is a check valve, not shown, in pipe 39' such that the flow in pipe 39' is only towards the air filter 40 and never the reverse). As vacuum is created inside device 10, atmospheric air now enters the device through air filter 20, pipes 33, 15 and 16. As air enters the device through pipe 15 and inlet 18, air is distributed by the cap 19 around the bottom of the device to agitate the fuel or mixture causing all of the different fractions of the fuel to emulsify and evaporize evenly within the range of the operating temperature aided by the vacuum created by the intake manifold. Vapor mixes with the air entering inlet 16. As the vapor and air in the device rise upwardly passing through the foam filter liquid fuel is removed, then passes through the venturi tube 29. Since air also enters through opening 30 adjusted by control valve 31, a venturi effect is created around tube 29 aiding in a greater flow of vapor from the device 10 passing through discharge opening 32 and pipe 32' into the intake manifold 42 of the engine.

At idling speed a greater vacuum is created in the intake manifold 42 than at the filter 40, thus vapor flow from the device into the intake manifold only through pipe 42' with no flow in pipe 39'. However at high speed, a greater vacuum is created at the air inlet 39, thus vapor flow from the device through pipe 39.

After the engine has run for quite some time, cooling water and the lubricating oil become heated, and either heated medium is used to heat the devices' heating coil 22 which can be either copper, plastic or other materials not affected by the fuel being used, by introducing the heated medium through inlet 23 and then out to 24. This heating aids in the further vaporization of the fuel or mixture inside the device since liquid evaporates faster at higher temperature and also to counteract the adiabatic cooling effect of evaporating liquids. It should be stated that vaporization takes place at a lower temperature in a vacuum that at atmospheric pressure.

It will be observed that what is being injected into the intake manifold of the engine is a vapor charge (not liquid) such that optimum combustion of the fuel or mixture is assured thereby utilizing almost all the heat energy of the vapor fuel to produce a clean exhaust.

Actual test conducted with this system and device gave the following results:

At idling speed, using a 25 C.C. gasoline without the device, the conventional engine runs for 121.5 seconds. However, by connecting the device as shown in Figure 2 and using 25 C.C. of gasoline, the engine runs for 239 seconds or a difference of 97 %.

The test also showed that the engine was more dependent on the vapor charge produced by the device than from the carburetor (the air-fuel mixture screw was almost closed). Since the connection from the device were rubber tubings, when the line 32' was bended to cut off the vapor fuel supply, the engine stopped.

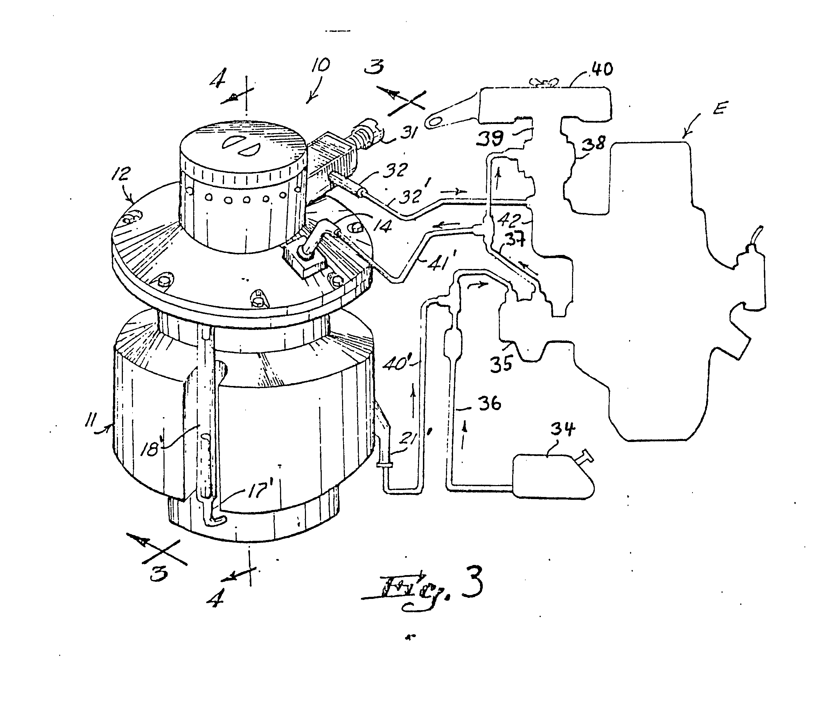

In Fig. 3 there is shown a second embodiment of the vapor charge producing device 10 according to the invention. Similarly to the embodiment shown in Fig. 1 device 10 is a bowl-shaped container 11 provided with a removable cover 12. The container can, of course, vary in shape. The device is provided with a float 13 having a valve control 13a to control the fuel or mixture level inside the bowl by way of the fuel or mixture inlet 14 made on the cover 12.

The bowl 11 is provided with an annular flange 15' at its upper end having a vertically disposed air agitator duct 16' slightly extending at its upper and lower face thereof. At the bottom of said bowl is provided with a companion air agitator duct 17' disposed in vertical alignment with the air duct 16', said duct 17' extending to the center of the inner bottom surface of said bowl. A transparent plastic tube 18' provided with a reading scale is fittingly inserted between the air ducts 16' and 17'. A foam-mesh wire bubbler 19' is secured on top of the discharge opening of the duct 17'such that the air entering in said air agitator duct creates tiny bubbles which agitate the fuel therein.

Also provided at the inner wall near the bottom of the bowl is a fuel return valve 20' having an outlet 21' adapted to be connected to a fuel return pipe or tube. It should be noted that the fuel in the bowl is vaporized by agitation and after quite a time, the less volatile fraction increases. The fuel return valve 20' allows the return of quality fuel which is supplied by the fuel pump from the tank to insure consistent supply of quality fuel for uniform and sufficient vapor charge.

The bowl cover 12 is secured to the annular flange 15' of the bowl by the bolts 15a. On top of the cover 12 is a concentrically integrated cylindrical filter housing 22' having a removable cover 23'. A plurality of closely spaced air inlets 24' are disposed circumferentially in said housing and at the bottom is provided with an air duct 25' extending to and adapted to connect with the air agitator duct 16'. Adjacent said air duct 25' is a larger diameter air duct 26' which extends downwardly to the inside of said bowl and terminates a distance above the fuel. The air duct 26' is provided with a bent portion 26a to provide a swirling movement of the air above the fuel. An air bleed jet 27' connects the upper portion of the air duct 26' to the main vapor outlet 28'. A fuel splash guard 28a is provided below the vapor outlet 28.

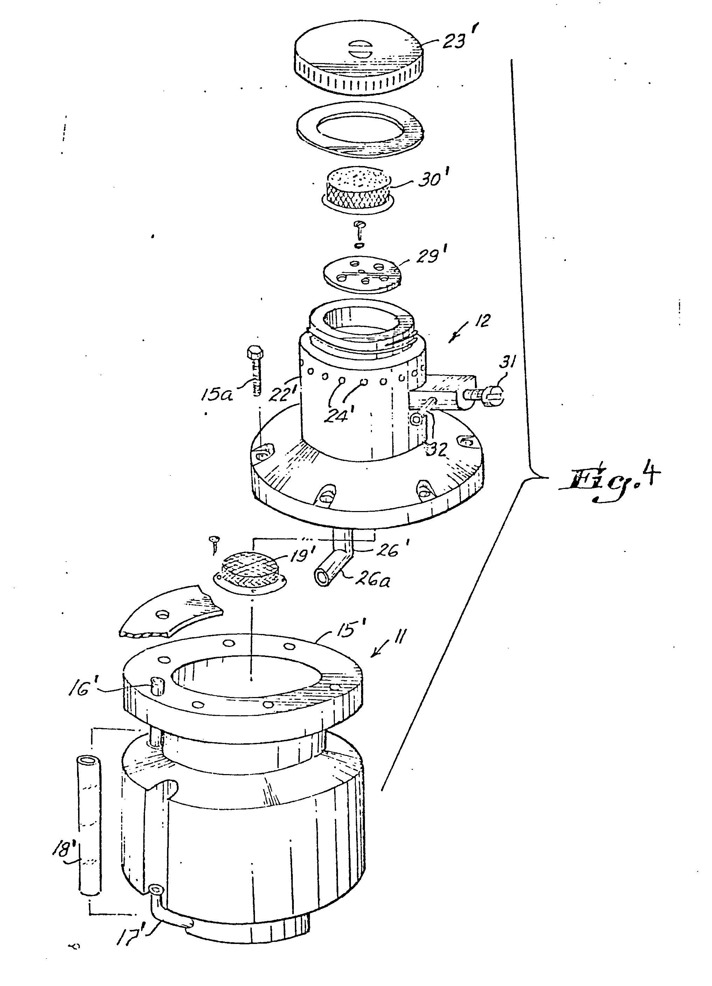

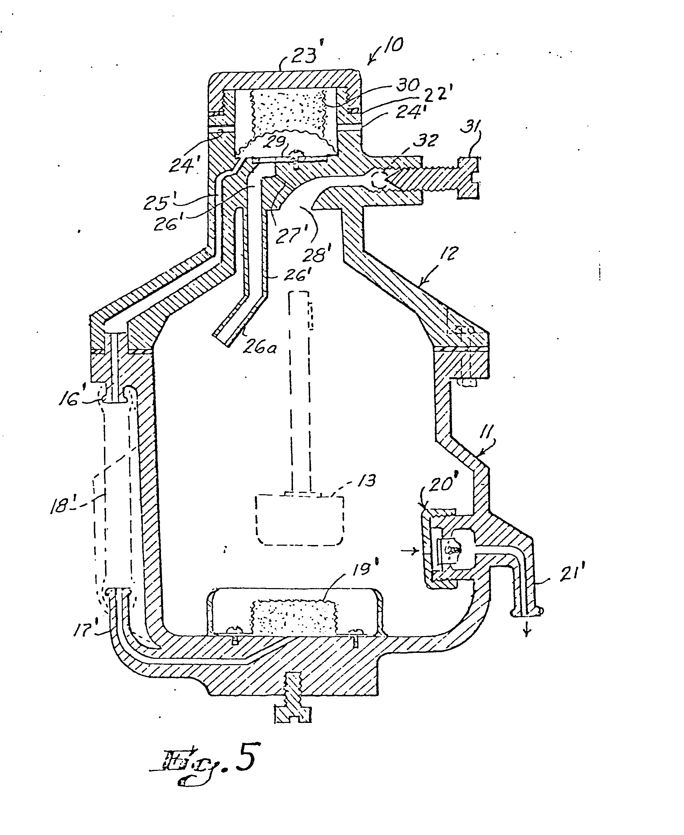

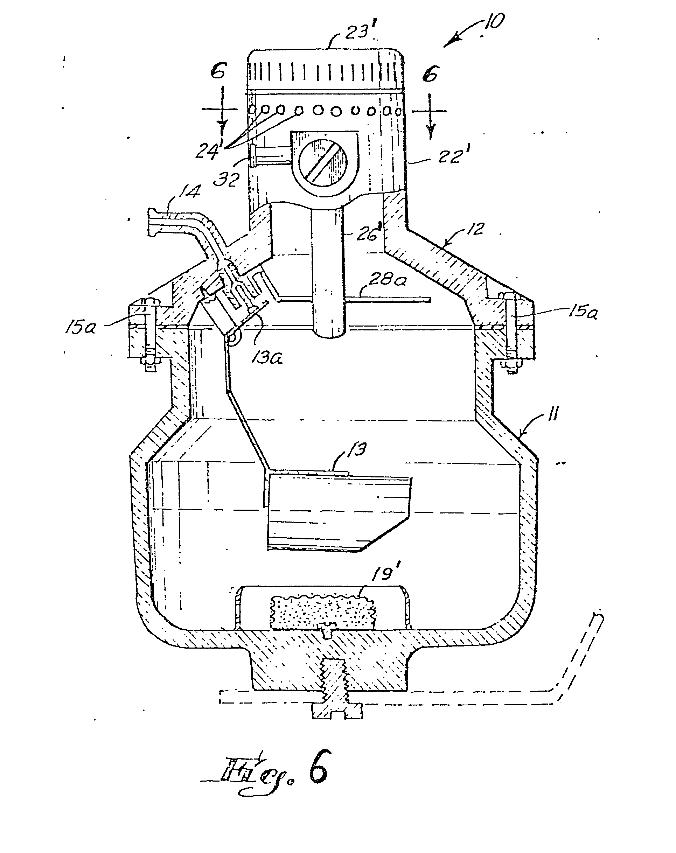

A multi-air jet selector disc 29' is adjustably secured at the bottom surface of the filter housing 22' by means of a screw. A foam/mesh screen air filter 30' is provided on top of said selector disc. As clearly shown in Figs. 2 and 6, said selector disc is provided with a series of spaced holes or apertures a, b , c, d and e, having gradually increasing diameters and positioned in such a manner that the center each of said holes coincides with the center of air duct 26'. The openings regulate the air fuel mixture of the vapor charge.

The main vapor outlet 28' is provided with a vapor flow control 31 and a final vapor discharge opening 32. The air bleed jet 27' which is tapped from the air duct 17' induces greater vapor flow at the main vapor outlet 28'.

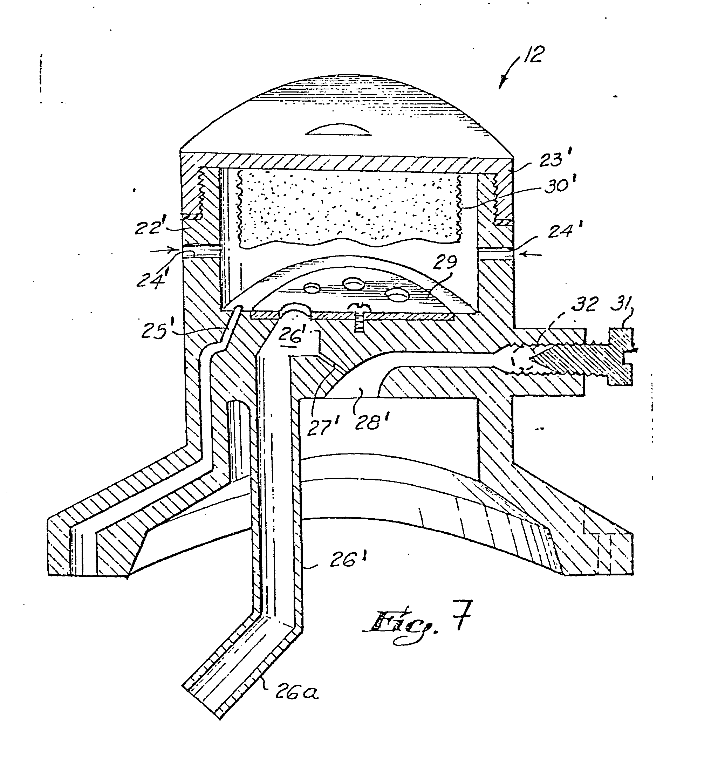

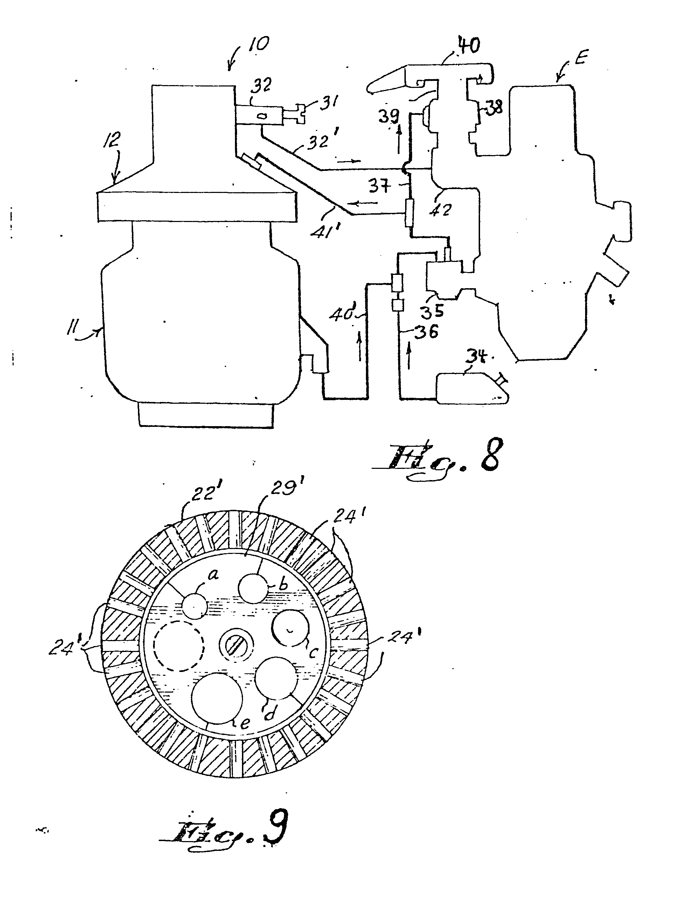

Figures 3 and 9 show the schematic connection of the system, which shows the vapor charge producing device 10 connected to an internal combustion engine E.

Engine E is provided with a fuel tank 34 connected to a fuel pump 35 by the pipe 36 and pipe 37 which is connected to the carburetor 38. The carburetor 38 has an air inlet 39 provided with an air filter 40.

A fuel return pipe or tube 40' is tapped to the fuel line 36 before the fuel pump withdraw a controlled amount of fuel in the bowl 11 to be mixed with the fresh supply of fuel from the tank 34.

Device 10 receives fuel from the fuel supply pipe 41' connected to the fuel line 37 between the fuel pump and the carburetor. Vapor from the device 10 is discharged through opening 32 connected by pipe 32' to the engine's intake manifold which is provided with a check valve.

When the engine E is started, fresh fuel from the tank 34 is directly supplied to the vapor charge producing device 10 by the fuel pump 35 via the fresh supply pipe 41' until the desired level is attained as controlled by the float 13 to close the fuel inlet 14. Gradually shift over to vapor charges by opening vapor valve 31 and at the same time closing down the carburetor.

As the engine E runs on idling, vacuum is created in the intake manifold 42, thus also creating a vacuum in the device 10 through pipe 32'.

As vacuum is created inside the device 10, atmospheric air now enters the device through the air inlets 24', air filter 30', air agitator ducts 16', 17' via the air duct 25' and the air duct 26' which extends inside the bowl. The opening of the air duct 26' is controlled by the multi-air jet selector disc 29'. As air enters the device, through the air agitator ducts 16', 17' air is distributed by the foam-mesh wire bubbler 19' to agitate the fuel and vaporize same of the fuel. Vapor mixes with air inside the bowl. The mixture of vapor and air inside the device is suck and drawn upwards to the main vapor outlet 28. More air is mixed through bleed jet 27'.

What we claim as new is:

1. A fuel vapor charge producing device comprising a pure liquid fuel or mixture container which can be of any desired shape and material with a cover and a float secured inside said device to control the inflow of pure liquid fuel or mixture into the container, a fuel or mixture inlet-valve made on said container for the entry of fuel or mixture, characterized by an air inlet (16) adapted to allow the entry of air into said container (11) above the liquid or mixture level and another air inlet (18) below the fuel or mixture level such that the incoming air comes in contact with the liquid fuel or mixture to aid and agitate in emulsifying and vaporizing said fuel or mixture evenly within the range of the operating temperature, and a vapor outlet (25) connected to the intake manifold (42) and/or to the air inlet (39) of the carburetor (38) of a conventional internal combustion engine, such that when the engine runs, the device is subjected to a vacuum pressure to force atmospheric air to be sucked into said device through the air inlets (16, 18) and to provide the proper or ideal air/fuel or mixture ratio.

2. A fuel vapor charge producing device as claimed in claim 1, characterized by a heating means (22) inside the device adapted to heat the liquid fuel or mixture inside said device such that vaporization of the fuel or mixture is enhanced and to counteract the adiabatic cooling effect of evaporating liquids.

3. A fuel vapor charge producing device as claimed in claim 1,

characterized in,

that the fuel mixture vapor discharge outlet (25) consists of a venturi tube (29), one end being connected to an air pipe (33) and the other connected to the intake manifold (42) of the engine such that a greater flow of vapor is induced by the venturi effect of the venturi tube (29).

4. A fuel vapor charge producing device comprising a liquid fuel or mixture bowl-shape container; an associated cover for said container having a fuel inlet valve; and a float secured in said device, said cover integrally incorporating therewith a cylindrical air filter housing disposed vertically and concentrically on top thereof;

characterized by

an air agitator duct (17') integrated in said device extending from the air filter housing (22') to the bottom thereof to agitate the fuel or mixture therein; another air duct (16') in said air filter housing (22') said air duct (16') extending to the inside of said container (11) and having an outwardly bent portion (26a) to produce a swirling effect of the air to achieve a higher degree of mixture; a multi air jet selector disc (29') provided on said air filter housing (22'), said selector disc (29') having a plurality of spaced holes (a, b, c, d, e) of gradully increasing apertures adapted to the air duct opening on said housing (22') the opening of said air ducts depending on the requirement of an engine piston displacement to control the air-fuel mixture of the engine; a buffle (28a) inside the device to minimize the fuel splashing; a vapor outlet (28) directly connected to the intake manifold (42) and an air bleed jet (27') provided on said vapor outlet (28') to feed sufficient flow of air vapor mixture to the intake manifold (42).

5. A fuel vapor charge producing device in accordance
with claim 4,
characterized by
a fuel return valve (20') secured inside or to the
device proximate the bottom portion thereof, said fuel
return valve (20') being connected to the fuel line
(36) before the fuel pump (35) of the engine to ensure
consistent supply of quality fuel into the device for
uniform and sufficient vapor charge.

Fig. 1

_Fig. 2_

Fig. 3

23'

30'

29'

12

15a 22' 31

24' 32

26'

19' 26a

15'

16' 11

18'

17'

*Fig.*4

0026243

5/8

Fig. 5

_Fig._ 6

Fig. 7

*Fig. 8*

*Fig. 9*

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | DE - C - 413 046 (E. FISCHER et al.) <br> * page 2, lines 21 to 76; fig. * <br> -- <br> DE - A1 - 2 722 168 (PIERBURG GMBH & CO.) <br> * page 12, paragraph 2 to page 13 * <br> -- <br> DE - C - 678 513 (H. KIELHOLZ) <br> * page 2, lines 37 to 116 * <br> -- <br> US - A - 1 725 111 (A.C. SWEENY) <br> * page 1, line 77 to page 2, line 122 * <br> ---- | 1,2 <br><br><br> 1,2 <br><br><br> 2 <br><br><br> 2 | F 02 M  31/18 |

TECHNICAL FIELDS SEARCHED (Int. Cl.³)

F 02 M   5/00

F 02 M  29/00

F 02 M  31/00

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

| | The present search report has been drawn up for all claims | | | |
|---|---|---|---|---|
| Place of search <br> Berlin | Date of completion of the search <br> 09-12-1980 | Examiner <br> STÖCKLE | | |

EPO Form 1503.1  06.78